# EUROPEAN PATENT SPECIFICATION

(11) **EP 3 249 661 B1**
(45) Date of publication and mention of the grant of the patent: **03.05.2023**
(21) Application number: 17177887.1
(22) Date of filing: 27.03.2015
(51) Int. Cl.: H01F 3/08, H01F 17/04, H01F 27/02, H01F 27/29, H01F 27/28, H01F 27/30, H01F 41/00, H01F 41/02, H01F 41/06, H01F 41/07

(54) **INDUCTOR**
INDUKTOR
INDUCTEUR

(30) Priority: 01.04.2014 CN 201410129094
(43) Date of publication of application: 29.11.2017
(62) Divisional of application: 15713459.4
(73) Proprietor: Würth Elektronik eiSos GmbH & Co. KG, 74638 Waldenburg (DE)
(72) Inventor: Weichang, Huang, Heyuan City, Guangdong Province 517000 (CN)
(74) Representative: Rau, Schneck & Hübner Patentanwälte Rechtsanwälte PartGmbB

(56) References cited:
- EP-A2- 2 779 182
- CN-U- 201 590 319
- CN-U- 202 887 902
- JP-A- H02 103 916
- JP-A- 2003 168 610
- US-A1- 2008 036 566
- US-A1- 2009 278 650
- US-A1- 2010 134 233
- US-A1- 2012 188 040
- US-A1- 2012 268 231
- US-A1- 2014 002 227

## Description

The present application claims priority of Chinese patent application CN 2014 1012 9094.2.

### Technical Field

The invention relates to an inductor, in particular to an inductor capable of improving its manufacturability and performances.

### Background Art

With the rapid innovation of electronic technology, demands on electronic components with high efficiency and low loss are higher increasingly. Inductors, wherein the electrodes are formed by extended portions of the coil, are known from the documents US 2010/134233 A1, US 2009/0278650 A1 as well as JP 2003168610 A. The documents US 2014/002227 A1, JP 2103916 A, US 2008/036566 A1 as well as US 2012/188040 A1 describe inductors in which the coil is connected to additional electrodes. Also the documents US 2012/0268231 A1, CN 202887902 U and CN 201590319 U disclose inductors. The die-casting inductors formed integrally appearing on the present market cannot reach above-mentioned effects due to limitations in structural layout design and material combination. Therefore, there is a need for an improved induction component, as an inductor for a specific application field, which can break through above limitations and be provided with the capabilities, characteristics and functions that the current manufacturing equipment and method do not have.

### Summary of the Invention

An object in accordance with the invention is to provide an inductor capable of improving its manufacturability.

The object in accordance with the invention is achieved by an inductor as specified in claim 1.

Preferred embodiments are defined in the dependent claims.

The inductor has the following advantages compared with the prior art:
Through a preferred integral moulding power casting process, the electrodes of the prefabricated mounted inner core are encased directly in the outer encasing layer, and thereby the firmness of the electrodes can be improved greatly and quality risk can be reduced; and post processing procedures for a conventional product can be derated and the manufacturing cost can be saved.

Through the combination of separated-type core shaft, the core shaft is combined to be of different materials, thereby providing multiple electrical parameter variations for the inductors of the same specifications so as to meet demands of the client on designs of various electrical performances under the same volume.

### Brief Descriptions of the Drawings

- Fig. 1: is a structural perspective view illustrating an inductor in accordance with an embodiment, which is not part of the present invention.
- Fig. 2: is a structural perspective view illustrating a bottom of the inductor in accordance with the embodiment, which is not part of the present invention.
- Fig. 3: is a structural perspective view illustrating an inner core of the inductor in accordance with the embodiment, which is not part of the present invention.
- Fig. 4: is a structural perspective view illustrating a flat coil of the inductor in accordance with the embodiment, which is not part of the present invention.
- Fig. 5: is a structural perspective view illustrating a T-shaped core shaft of the inductor in accordance with the embodiment, which is not part of the present invention.
- Fig. 6: is a structural perspective view illustrating a sheet-shaped base of the inductor in accordance with the embodiment, which is not part of the present invention.
- Fig. 7: is a structural perspective view illustrating a core rod of the inductor in accordance with the embodiment, which is not part of the present invention.
- Fig. 8: is a structural perspective view illustrating an embodiment of the inductor, which is not part of the present invention.
- Fig. 9: is a structural perspective view of a bottom of the inductor in accordance with the embodiment, which is not part of the present invention.
- Fig. 10: is a structural perspective view illustrating an inner core of the inductor in accordance with the embodiment, which is not part of the present invention.
- Fig. 11: is a structural perspective view illustrating a flat oval coil of the inductor in accordance with the embodiment, which is not part of the present invention.
- Fig. 12: is a structural perspective view illustrating a T-shaped core shaft of the inductor in accordance with the embodiment, which is not part of the present invention.
- Fig. 13: is a structural perspective view illustrating a sheet-shaped base of the inductor in accordance with with the embodiment, which is not part of the present invention.
- Fig. 14: is a structural perspective view of an oval core rod of the inductor in accordance with the embodiment, which is not part of the present invention.
- Fig. 15: is a structural perspective view illustrating of the inductor in accordance with an embodiment of the present invention.
- Fig. 16: is a structural perspective view illustrating the bottom 1 of the inductor in accordance with the embodiment.
- Fig. 17: is a structural perspective view illustrating the bottom 2 of the inductor in accordance with the embodiment.
- Fig. 18: is a structural perspective view illustrating the bottom 3 of the inductor in accordance with the embodiment.
- Fig. 19: is a structural perspective view illustrating the bottom 4 of the inductor in accordance with the embodiment.
- Fig. 20: is a structural perspective view illustrating the inner core of the inductor in accordance with the embodiment.
- Fig. 21: is a structural perspective view illustrating the flat circular coil of the inductor in accordance with the embodiment.
- Fig. 22: is a structural perspective view illustrating the T-shaped core rod of the inductor in accordance with the embodiment.
- Fig. 23: is a structural perspective view illustrating a sheet-shaped base of the inductor in accordance with the embodiment.
- Fig. 24: is a structural perspective view illustrating the core rod of the inductor in accordance with the embodiment.
- Fig. 25: is a structural perspective view illustrating a polygonal shape of the inductor in accordance with an embodiment, which is not part of the present invention.
- Fig. 26: is a structural perspective view illustrating a polygonal bottom of the inductor in accordance with an embodiment, which is not part of the present invention.
- Fig. 27: is a structural perspective view illustrating a circular shape of inductor in accordance with the embodiment, which is not part of the present invention.
- Fig. 28: is a structural perspective view illustrating a circular bottom of the inductor in accordance with the embodiment, which is not part of the present invention.

### DETAILED DESCRIPTION

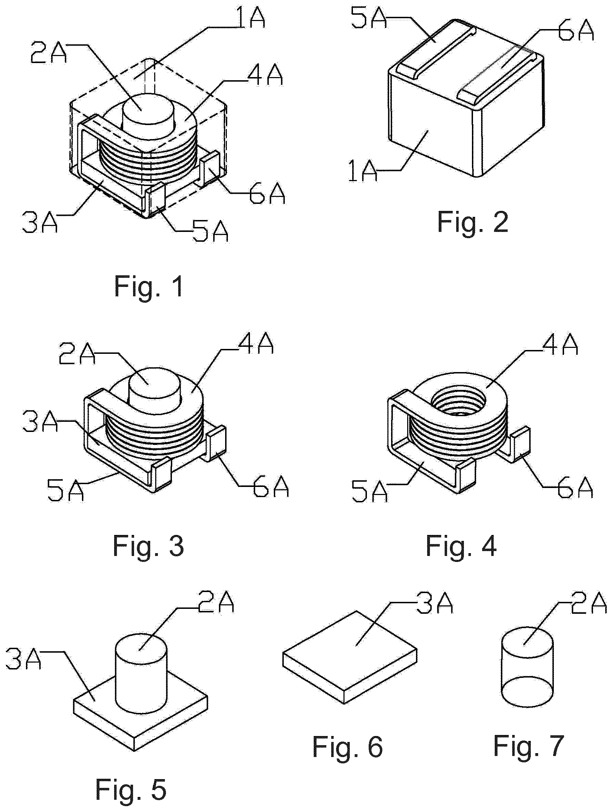

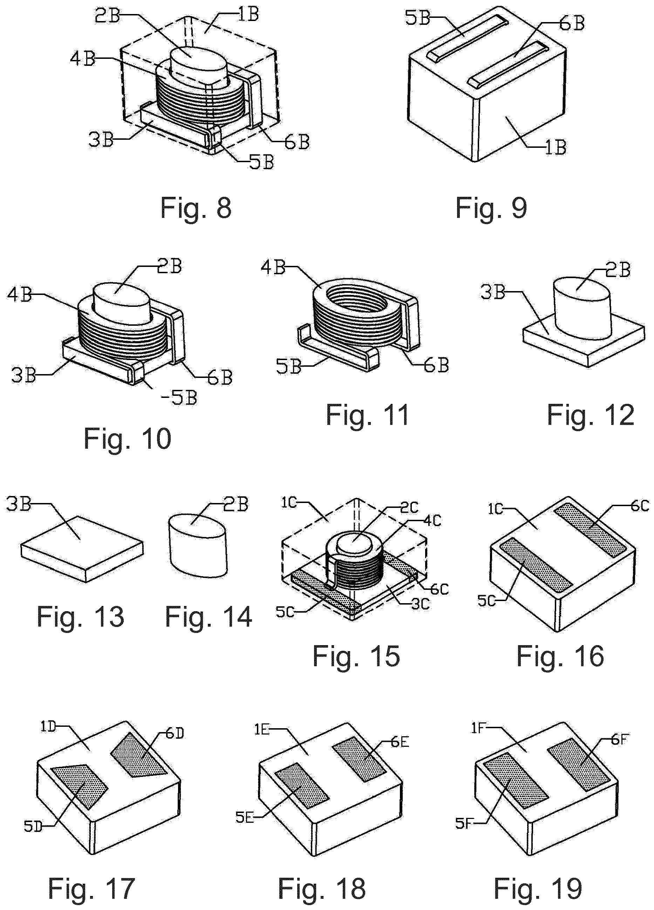

The inductor in accordance with embodiments of the present invention is described below in more detail in connection with the accompanying drawings 15-23. The examples shown in Fig. 1-14, 24-28 do not form part of the present invention.

As shown in Figs. 1 to 28, comprising embodiments of the present invention and examples not being part of the present invention, as stated above, there is provided an inductor, comprising preparing a mounted inner core (Figs. 3, 10, 20) by using an enameled coil (4A, 4B, 4C) and a core rod (2A, 2B, 2C, 3A, 3B, 3C); putting the mounted inner core (Figs. 3, 10, 20) prepared previously into a corresponding mould so that terminals connecting the coil or portions of the coil which extend to form electrodes (5A, 5B, 6A, 6B) or which are electroplated previously to form electrodes (5C, 5D, 5E, 5F, 6C, 6D, 6E, 6F) are suitable for being exposed out; forming an outer encasing layer (1A, 1B, 1C) through die-casting metal powder by a mechanical or hydraulic powder metallurgy moulding press, wherein the mounted inner core (Figs. 3, 10, 20) and the electrodes (5A, 5B, 5C, 5D, 5E, 5F, 6A, 6B, 6C, 6D, 6E, 6F) are buried into the centre of the outer encasing layer, and the electrodes (5A, 5B, 5C, 5D, 5E, 5F, 6A, 6B, 6C, 6D, 6E, 6F) can be formed by extending and bending the enameled coil or be formed by connecting the enameled coil to the corresponding end faces through the processing such as spot welding, soldering, film plating with silver paste, electroplating and the like, thereby the inductor is manufactured.

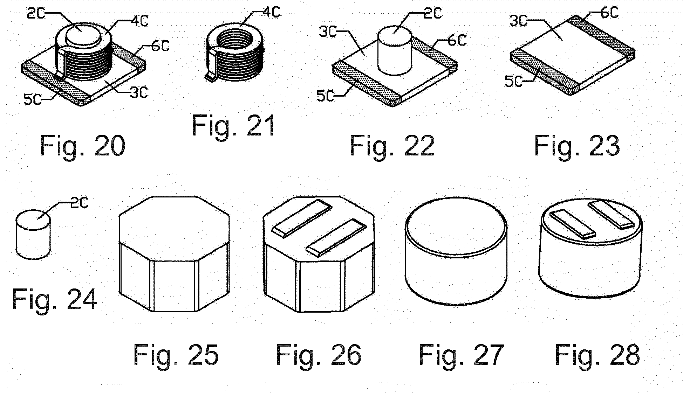

The mounted inner core (Figs. 3, 10, 20) comprises the enameled coil (4A, 4B,4C) and the core shaft (2A, 2B, 2C, 3A, 3B, 3C) disposed in the inner diameter of the enameled coil; the mounted inner core (Figs. 3, 10, 20) may be in the shape of a square (Figs. 1, 8, 15), a circle (Fig. 27) or a polygon (Fig. 25); the electrodes of the mounted inner core (Figs. 3, 10, 20) may be formed by extended portions of the coil or be formed by previously electroplating or film plating with the silver paste on both ends and the bottom of the mounted inner core; and the mounted inner core (Figs. 3, 10, 20) is buried into the centre of the outer encasing layer so that the both ends of the exposed electrodes are encased by a small part of the outer encasing layer.

The enameled coil (4A, 4B, 4C) may be in the shape of a circle or an oval; the enameled coil may comprise a round enameled wire or a flat enameled wire according to wire shape; leading-outs of the enameled coil may be formed, by winding the wire, to be in the same direction or opposite directions, respectively; the leading-outs of the enameled coil may be on the bottom or sides of the inductor; the enameled coil may be formed by winding the wire in a clockwise or counterclockwise direction; the enameled coil may comprise a single layer or multiple layers; and the enameled coil may be formed through winding and stacking the wire by wide faces or narrow faces thereof.

The core shaft (2A, 2B, 2C, 3A, 3B, 3C) may be of a 'T' shape or a 'rod' shape; the core shaft in 'T' shape may be formed integrally, of the same material, into the 'T' shape, or may be formed into the 'T' shape by combining a rod with a sheet-shaped base which each other are made of different materials and are separated; and the core shaft is made of a material such as manganese zinc, nickel zinc, iron powder core or alloy powder, or is made of a combination of various materials such as manganese zinc, nickel zinc, iron powder core and alloy powder.

The outer encasing layer (1A, 1B, 1C) is formed of metal powder particles through die-casting process; the metal powder particles are formed by selecting, according to requirements for properties, corresponding alloy powder, reduced iron powder, carbonyl iron powder or ferrite material and corresponding adhesive resin containing a curing agent to be stirred fully and mixed; or the metal power particles are formed by selecting, according to requirements for properties, a combination of various metal powders such as alloy powder, reduced iron powder, carbonyl iron powder or ferrite material and corresponding adhesive resin containing a curing agent to be stirred fully and mixed; and the adhesive resin comprises epoxy resin, phenolic resin, phenolic epoxy resin, o-cresol formaldehyde epoxy resin or a mixture of multiple resins and corresponding curing agent as well as other organic solvents.

One way for forming the electrodes (5A, 5B, 5C, 5D, 5E, 5F, 6A, 6B, 6C, 6D, 6E, 6F), not forming part of the present invention, is that the electrodes may be formed by terminals of the enameled coil connected thereto or may be formed directly by extending and bending the enameled coil, or be formed by flattening or thinning the enameled coil, then performing soldering or electroplating based on the flattening or thinning of the enameled coil and directly extending the enameled coil; or be formed by connecting the enameled coil to corresponding end faces through a process such as spot welding, soldering, film plating with silver paste and electroplating.

Both ends of the electrodes (5A, 5B, 5C, 5D, 5E, 5F, 6A, 6B, 6C, 6D, 6E, 6F) are buried in the outer encasing layer deeply, and exposed middle sections of the electrodes are cleaned to become smooth end faces by grinding with a grinding wheel or stripping paint with laser and are soldered or electroplated to form final electrodes of the inductor.

Another way for forming the electrodes (5A, 5B, 5C, 5D, 5E, 5F, 6A, 6B, 6C, 6D, 6E, 6F) according to the present invention is to form the electrodes previously by performing electroplating or film plating with silver paste on both ends and the bottom of the mounted inner core; and the electrodes are connected electrically to the internal coil through soldering and spot welding.

The electrodes (5A, 5B, 5C, 5D, 5E, 5F, 6A, 6B, 6C, 6D, 6E, 6F) have bottoms which can be made into various shapes, depending on requirements, such as symmetrical or asymmetrical strips, squares, and trapezoids.

The inductor can have an appearance of a square, a circle or a polygon; the inductor can be spray-painted or be not spray-painted; and the height of the inductor can be adjusted correspondingly according to the design requirements and the performance parameters.

A method for manufacturing an inductor, not part of the present invention, comprises the steps of:
(1) Selecting a type of enameled wire and winding the enameled wire in a clockwise or counterclockwise direction into a single-layer or multiple-layer-stacked coil upon design requirements, wherein the coil has leading-outs preferably in the same direction;
(2) Putting a `rod-shaped'/`T-shaped' core shaft into inner diameter of the coil so that a bottom of a sheet-type core shaft is inserted, with two sides of the bottom, into the two leading-outs of the coil to form a prefabricated mounted inner core; or selecting an enameled coil to be put to the bottom of an electroplated sheet-type core shaft and connecting, respectively, leading-outs of the coil to the corresponding end faces by spot welding or soldering to form a prefabricated mounted inner core; or selecting a 'rod-shaped' or 'T-shaped' core shaft and winding directly the wire around the core shaft so that the core shaft is enwrapped by the coil to form a prefabricated mounted inner core; or winding directly the wire around a 'T-shaped' core shaft so that the core shaft is enwrapped by the coil, wherein electrodes are formed by mosaicing terminals or electroplated coatings on both ends of the 'T-shaped' core shaft, and a prefabricated mounted inner core is formed by connecting both ends of the coil to the electrodes through directly spot welding process;
(3) Putting the prefabricated mounted inner core into a corresponding mould so that the coil connecting the terminals or portions of the coil which extend to form the electrodes or which are electroplated previously to form the electrodes are suitable for being exposed out of an encasing layer;
(4) Filling the mould with mixed metal powder particles and forming the outer encasing layer of the inductor through die-casting with cold pressing or a combination of cold pressing and hot pressing by a mechanical or hydraulic powder metallurgy moulding press;
(5) Both ends of the electrodes formed by the terminals connecting the coil or the extended portions of the coil are buried in the outer encasing layer deeply, and exposed middle sections of the electrodes are cleaned to become smooth end faces by grinding with a grinding wheel or stripping paint with laser, and are soldered or electroplated to form final electrodes of the inductor; and the inductor is formed.
(6) Another way for forming the electrodes is to form the electrodes previously by performing electroplating or film plating with silver paste on both ends and the bottom of the mounted inner core, wherein the electrodes are connected electrically to the internal coil through soldering and spot welding; and the inductor is formed.

The enameled coil in the step (1) is in the shape of a circle or an oval; the enameled coil can comprise a round enameled wire or a flat enameled wire according to wire shape; leading-outs of the enameled coil are formed, by winding the wire, to be in the same direction or opposite directions, respectively; the leading-outs of the enameled coil are on the bottom or sides of the inductor; the enameled coil is formed by winding the wire in a clockwise or counterclockwise direction; the enameled coil comprises a single layer or multiple layers; and the enameled coil is formed through winding and stacking the wire by wide or narrow faces thereof.

The mounted inner core in the step (2) comprises the enameled coil and the core shaft disposed in the inner diameter of the enameled coil; the mounted inner core may be in the shape of a square, a circle or a polygon; the electrodes of the mounted inner core may be formed by extended portions of the coil or are formed by previously electroplating or film plating with the silver paste on both ends and the bottom of the mounted inner core; the mounted inner core is buried into the centre of the outer encasing layer so that both ends of the exposed electrodes are encased by a small part of the outer encasing layer.

The core shaft in the step (2) is of a 'T' shape or a 'rod' shape; the core shaft in 'T' shape is formed integrally, of the same material, into the 'T' shape, or is formed the 'T' shape by combining a 'rod' with a sheet-shaped base which each other are made of different materials and are separated; and the core shaft is made of a material of manganese zinc, nickel zinc, iron powder core or alloy powder, or is made of a combination of various materials such as manganese zinc, nickel zinc, iron powder core and alloy powder.

The outer encasing layer in the step (4) is formed of metal powder particles through die-casting process; the metal powder particles are formed by selecting, according to requirements for properties, corresponding alloy powder, reduced iron powder, carbonyl iron powder or ferrite material and corresponding adhesive resin containing a curing agent to be stirred fully and mixed; or the metal power particles are formed by selecting, according to requirements for properties, a combination of various metal powders such as alloy powder, reduced iron powder, carbonyl iron powder, or ferrite material and corresponding adhesive resin containing a curing agent to be stirred fully and mixed; and the adhesive resin comprises epoxy resin, phenolic resin, phenolic epoxy resin, o-cresol formaldehyde epoxy resin or a mixture of multiple resins and corresponding curing agent as well as other organic solvents.

The one way for forming the electrodes in the step (5) is that the electrodes are formed by terminals of the enameled coil connected to the coil or are formed by directly extending and bending the enameled coil, or are formed by flattening or thinning the enameled coil, then performing soldering or electroplating based on the flattening or thinning of the enameled coil and directly extending the enameled coil; or are formed by connecting the enameled coil to corresponding end faces through a process such as spot welding, soldering, film plating with silver paste and electroplating.

The both ends of the electrodes in the step (5) are buried in the outer encasing layer deeply, and the exposed middle sections of the electrodes are cleaned to become smooth end faces by grinding with a grinding wheel or stripping paint with laser and are soldered or electroplated to form final electrodes of the inductor.

The another way for forming the electrodes in step (6) is to form the electrodes previously by performing electroplating or film plating with silver paste on both ends and the bottom of the mounted inner core; the electrodes are connected electrically to the internal coil through soldering and spot welding; and the inductor is formed.

The electrodes in the step (6) have bottom which can be made into various shapes such as symmetrical or asymmetrical strips, squares, trapezoids depending on requirements.

The inductor has the following advantages compared with the prior art:
Through an integral moulding power casting process, the electrodes of the prefabricated mounted inner core are encased directly in the outer encasing layer, and thereby the firmness of the electrodes can be improved greatly and quality risk can be reduced; and post processing procedures for a conventional product can be derated and the manufacturing cost can be saved.

Through the combination of separated-type core shaft, the core shaft is combined to be of different materials, thereby providing multiple electrical parameter variations for the inductors of the same specifications so as to meet demands of the client on designs of various electrical performances under the same volume.

## Claims

1. An inductor, comprising
- a mounted inner core comprising an enameled coil (4C) and a T-shaped core shaft (2C, 3C), wherein the T-shaped core shaft (2C, 3C) is formed into the T shape by combining a rod (2C) with a sheet-shaped base (3C) which each other are made of different materials,
- electrodes (5C, 6C; 5D, 6D; 5E, 6E; 5F, 6F), and
- an outer encasing layer (1C; 1D; 1E; 1F),
- wherein
-- the T-shaped core shaft (2C, 3C) is disposed with the rod (2C) in an inner diameter of the enameled coil (4C),
-- two opposing lateral end sides of the sheet-shaped base (3C) are electroplated at the upper surface, the lateral side surface and the bottom surface thereof, wherein the upper surface is the surface on which the rod is disposed, and
-- leading-outs of the enameled coil (4C) are connected, respectively, to the corresponding electroplated upper surfaces of the end sides by spot welding or soldering, and
- wherein the electroplated bottom surfaces of the opposing end sides of the sheet-shaped base (3C) form the electrodes (5C, 6C; 5D, 6D; 5E, 6E; 5F, 6F) which are exposed out of the outer encasing layer (1C; 1D; 1E; 1F), and
- wherein the electroplated lateral side surfaces and the electroplated upper surfaces and the mounted inner core are buried into the centre of the outer encasing layer (1C; 1D; 1E; 1F).

2. The inductor as claimed in claim 1, **characterized in that** the electrodes (5C, 6C; 5D, 6D; 5E, 6E; 5F, 6F) have bottoms which are formed into symmetrical or asymmetrical strips, squares, or trapezoids depending on requirements.

3. The inductor as claimed in at least one of the claims 1 or 2, **characterized in that** the enameled coil (4C) is in the shape of a circle or an oval; the enameled coil (4C) comprises a flat enameled wire according to wire shape; leading-outs of the enameled coil (4C) are formed, by winding the wire; the enameled coil (4C) comprises a single layer or multiple layers; and the enameled coil (4C) is formed through winding and stacking the wire by wide faces thereof.

4. The inductor as claimed in at least one of claims 1 to 3, **characterized in that** the T-shaped core shaft (2C, 3C) is made of a material of manganese zinc, nickel zinc, iron powder core or alloy powder, or made of a combination thereof.

5. The inductor as claimed in at least one of claims 1 to 4, **characterized in that** the outer encasing layer (1C; 1D; 1E; 1F) is formed of metal powder particles through die-casting process; the metal powder particles are formed by selecting, according to requirements for properties, stirring fully and mixing corresponding alloy powder, reduced iron powder, carbonyl iron powder or ferrite material and corresponding adhesive resin containing a curing agent, or are formed by selecting, according to requirements for properties, stirring fully and mixing a combination of multiple metal powders of alloy powder, reduced iron powder, carbonyl iron powder or ferrite material and corresponding adhesive resin containing a curing agent; and the adhesive resin comprises epoxy resin, phenolic resin, phenolic epoxy resin, o-cresol formaldehyde epoxy resin or a mixture of multiple resins and corresponding curing agent as well as other organic solvents.

## Patentansprüche

1. Induktor, umfassend
- einen zusammengebauten inneren Kern, welcher eine lackisolierte Spule (4C) und einen T-förmigen Kernschaft (2C, 3C) umfasst, wobei der T-förmige Kernschaft (2C, 3C) durch Kombinieren eines Stabes (2C) mit einer plattenförmigen Basis (3C) in die T-Form geformt wird, die jeweils aus unterschiedlichen Materialien hergestellt sind,
- Elektroden (5C, 6C; 5D, 6D; 5E, 6E; 5F, 6F), und
- eine äußere Ummantelungsschicht (1C; 1D; 1E; 1F),
- wobei
-- der T-förmige Kernschaft (2C, 3C) mit dem Stab (2C) in einem Innendurchmesser der lackisolierten Spule (4C) angeordnet ist,
-- zwei gegenüberliegende seitliche Stirnseiten der plattenförmigen Basis (3C) an deren Oberseite, seitlicher Oberfläche und Unterseite galvanisiert sind, wobei die Oberseite diejenige Fläche ist, auf der der Stab angeordnet ist, und
-- Anschlüsse der lackisolierten Spule (4C) jeweils mit den entsprechenden galvanisierten Oberseiten der Stirnseiten durch Punktschweißen oder Löten verbunden werden, und
- wobei die galvanisierten Unterseiten der gegenüberliegenden Stirnseiten der plattenförmigen Basis (3C) die Elektroden (5C, 6C; 5D, 6D; 5E, 6E; 5F, 6F) bilden, die aus der äußeren Ummantelungsschicht (1C; 1D; 1E; 1F) herausragen, und
- wobei die galvanisierten seitlichen Oberflächen und die galvanisierten Oberseiten und der zusammengebaute innere Kern in das Zentrum der äußeren Ummantelungsschicht (1C; 1D; 1E; 1F) eingelassen sind.

2. Induktor nach Anspruch 1, **dadurch gekennzeichnet, dass** die Elektroden (5C, 6C; 5D, 6D; 5E, 6E; 5F, 6F) Böden haben, die je nach Bedarf zu symmetrischen oder asymmetrischen Streifen, Quadraten oder Trapezen geformt sind.

3. Induktor nach mindestens einem der Ansprüche 1 oder 2, **dadurch gekennzeichnet, dass** die lackisolierte Spule (4C) die Form eines Kreises oder einer Ellipse hat; die lackisolierte Spule (4C) einen flachen Lackdraht in Drahtform umfasst; Anschlüsse der lackisolierten Spule (4C) durch Winden des Drahtes gebildet sind; die lackisolierte Spule (4C) eine einzelne Schicht oder eine Vielzahl von Schichten umfasst; und die lackisolierte Spule (4C) durch Winden und Stapeln des Drahtes an seinen Breitseiten gebildet wird.

4. Induktor nach mindestens einem der Ansprüche 1 bis 3, **dadurch gekennzeichnet, dass** der T-förmige Kernschaft (2C, 3C) aus einem Material aus Manganzink, Nickelzink, Eisenpulverkern oder Legierungspulver oder aus einer Kombination davon hergestellt ist.

5. Induktor nach mindestens einem der Ansprüche 1 bis 4, **dadurch gekennzeichnet, dass** die äußere Ummantelungsschicht (1C; 1D; 1E; 1F) aus Metallpulverpartikeln in einem Druckgussverfahren gebildet ist; die Metallpulverpartikel durch Auswählen gemäß der gewünschten Eigenschaften, vollständiges Verrühren und Mischen eines entsprechenden Legierungspulvers, reduzierten Eisenpulvers, Karbonyleisenpulvers oder Ferrit-Materials mit einem entsprechenden Klebeharz, welches ein Härtungsmittel enthält, gebildet sind oder durch Auswählen gemäß der gewünschten Eigenschaften, vollständiges Verrühren und Mischen einer Kombination aus einer Vielzahl von Metallpulvern ausgewählt aus Legierungspulver, reduziertem Eisenpulver, Karbonyleisenpulver oder Ferrit-Materials mit einem entsprechenden Klebeharz, welches ein Härtungsmittel enthält, gebildet sind; und das Klebeharz Epoxidharz, Phenolharz, Phenol-Epoxidharz, O-Kresol-Formaldehyd-Epoxidharz oder eine Mischung aus einer Vielzahl von Harzen und entsprechendem Härtungsmittel sowie weitere organische Lösungsmittel umfasst.

## Revendications

1. Bobine d'induction, comprenant
- une partie centrale interne montée comprenant une bobine émaillée (4C) et un axe formant noyau en T (2C, 3C), dans lequel l'axe formant noyau en T (2C, 3C) est formé selon la forme en T par combinaison d'une tige (2C) avec une base en forme de feuille (3C), lesquelles sont constituées respectivement de matériaux différents,
- des électrodes (5C, 6C ; 5D, 6D ; 5E, 6E ; 5F, 6F), et
- une couche d'enrobage externe (1C ; 1D ; 1E; 1F),
- dans laquelle
-- l'axe formant noyau en T (2C, 3C) est disposé avec la tige (2C) dans un diamètre intérieur de la bobine émaillée (4C),
-- deux faces d'extrémité latérales opposées de la base en forme de feuille (3C) sont électroplaqués au niveau de la surface supérieure, de la surface latérale et de la surface inférieure de celle-ci, dans laquelle la surface supérieure est la surface sur laquelle la tige est disposée, et
-- les sorties de la bobine émaillée (4C) sont connectées, respectivement, aux surfaces supérieures électroplaquées correspondantes des faces d'extrémité par soudage par points ou brasage, et
- dans laquelle les surfaces inférieures électroplaquées des faces d'extrémité opposées de la base en forme de feuille (3C) forment les électrodes (5C, 6C ; 5D, 6D ; 5E, 6E ; 5F, 6F) qui sont exposées hors de la couche d'enrobage externe (1C ; 1D ; 1E ; 1F) et
- dans laquelle les surfaces latérales électroplaquées et les surfaces supérieures électroplaquées et la partie interne centrale montée sont noyées au centre de la couche d'enrobage externe (1C ; 1D ; 1E ; 1F).

2. Bobine d'induction selon la revendication 1, **caractérisée en ce que** les électrodes (5C, 6C ; 5D, 6D ; 5E, 6E ; 5F, 6F) ont des fonds qui sont formés en bandes, carrés ou trapézoïdes symétriques ou asymétriques selon les besoins.

3. Bobine d'induction selon au moins l'une des revendications 1 ou 2, **caractérisée en ce que** la bobine émaillée (4C) a la forme d'un cercle ou d'un ovale ; la bobine émaillée (4C) comprend un fil plat émaillé selon une forme de fil ; des sorties de la bobine émaillée (4C) sont formées par enroulement du fil ; la bobine émaillée (4C) comprend une seule couche ou de multiples couches ; et la bobine émaillée (4C) est formée par enroulement et empilage du fil sur les faces larges de celle-ci.

4. Bobine d'induction selon au moins l'une des revendications 1 à 3, **caractérisée en ce que** l'axe formant noyau en T (2C, 3C) est fait d'un matériau parmi le manganèse-zinc, le nickel-zinc, un noyau en poudre de fer ou une poudre d'alliage, ou fait d'une combinaison de ceux-ci.

5. Bobine d'induction selon au moins l'une des revendications 1 à 4, **caractérisée en ce que** la couche d'enrobage externe (1C ; 1D ; 1E ; 1F) est composée de particules de poudre métallique au moyen d'un processus de moulage sous pression ; les particules de poudre métallique sont formées par sélection, en fonction d'exigences en matière de propriétés, par agitation et mélange soigneux d'une poudre d'alliage correspondante, de poudre de fer réduit, de poudre de fer carbonyle ou de matériau de ferrite et d'une résine adhésive correspondante contenant un agent de traitement, ou sont formées par sélection, en fonction d'exigences en matière de propriétés, par agitation et mélange soigneux d'une combinaison de multiples poudres métalliques d'alliage de poudre, de poudre de fer réduit, de poudre de fer carbonyle ou de matériau de ferrite et d'une résine adhésive correspondante contenant un agent de traitement ; et la résine adhésive comprend une résine époxy-dique, une résine phénolique, une résine époxy-phénolique, une résine époxy-o-crésol-formaldéhyde ou un mélange de multiples résines et d'un agent de traitement correspondant, ainsi que d'autres solvants organiques.
